# EUROPÄISCHE PATENTANMELDUNG

(11) **EP 2 523 304 A1**
(43) Veröffentlichungstag der Anmeldung: **14.11.2012**
(21) Anmeldenummer: 11165457.0
(22) Anmeldetag: 10.05.2011
(51) Int. Cl.: H02J 7/02, H02H 3/14

(54) **Batterieladegerät und Verfahren hierfür**

(71) Anmelder: Brusa Elektronik AG, 9466 Sennwald (CH)
(72) Erfinder: Krause, Axel, 9650, Nesslau (CH)
(74) Vertreter: Patentbüro Paul Rosenich AG

(57) **Zusammenfassung**

Es wird ein Batterieladegerät (1) angegeben, welches einen Wechselspannungseingang (2), einen Gleichspannungsausgang (3), einen Eingang (4) für einen Schutzleiter (PEN) und einen mit dem Wechselspannungseingang (2) verbundenen Gleichrichter (5) umfasst. Zusätzlich weist das Batterieladegerät (1) eine Spannungsmesseinrichtung (7) auf, welche zur Messung der Spannung (U₁, U₂) zwischen dem Schutzleiter (PEN) und zumindest einem Ausgangsspannungspotential des Gleichrichters (5) eingerichtet ist. Weiterhin wird ein Verfahren zum Betrieb eines solchen Batterieladegerätes (1) angegeben.

## Beschreibung

Die Erfindung betrifft ein Batterieladegerät, umfassend einen Wechselspannungseingang, einen Gleichspannungsausgang, einen Eingang für einen Schutzleiter und einen mit dem Wechselspannungseingang verbundenen Gleichrichter. Weiterhin betrifft die Erfindung ein Verfahren zum Betrieb eines Batterieladegeräts, welches einen Wechselspannungseingang, einen Gleichspannungsausgang, einen Eingang für einen Schutzleiter, sowie einen mit dem Wechselspannungseingang verbundenen Gleichrichter umfasst.

Batterieladegeräte der genannten Art sind weithin bekannt. Sie dienen dem Laden einer Batterie, beziehungsweise eines Akkumulators mit elektrischer Energie, um netzunabhängige, elektrische Geräte betriebsfähig zu machen. Wenn diese Geräte metallische Gehäuseteile umfassen, welche bei normalem Gebrauch von einem Benutzer berührt werden können, so sind neben der Isolation dieser metallischen Gehäuseteile gegen spannungsführende Teile besondere Vorkehrungen für den Fall zu treffen, dass die Isolation fehlerhaft ist und das Gehäuse somit gefährliche und unter Umständen lebensbedrohliche Spannungen führen kann. Dies trifft insbesondere für Elektroautos zu, bei denen gefährliche Spannungen im Fehlerfall nicht nur an dem Batterieladegerät sondern auch am Rahmen und an der Karosserie des Fahrzeugs auftreten könnten.

Beispielsweise offenbart die KR 10 2004 024 082 A dazu eine Ladeschaltung für ein Elektrokraftfahrzeug mit einer Schutzschaltung zur Trennung des Ladekabels. Dazu werden die Spannungen zwischen Fahrzeugmasse und den beiden Potentialen eines Ladekabels gemessen und für die Erkennung eines Isolationsfehlers ausgewertet. Das Ladekabel ist dabei elektrisch mit einem Transformator verbunden und somit galvanisch getrennt vom Stromnetz. Problematisch ist dabei, dass ein Isolationsfehler zum Gehäuse des Batterieladegerätes nicht erkannt wird.

Darüber hinaus offenbart die EP 0 751 600 A1 eine Überwachungsschaltung zur Detektion des korrekten Anschlusses eines Erdleiters. Wenn dies nicht der Fall ist, wird ein künstliches Fehlerstromsignal über einen Widerstand erzeugt, welches zur Auslösung eines in der überwachten Leitung angeordneten Fehlerstrom-Schutzschalters führt. Somit wird ein Laden aus sicherheitskritischen Netzen, welche keinen Schutzleiter aufweisen, unterbunden. Gerade das Vorhandensein eines Schutzleiters kann aber nicht generell vorausgesetzt werden, beispielsweise bei veralteten Stromnetzen von Wohnhäusern, sodass ein Laden eines Elektrofahrzeugs an solchen Netzen generell nicht möglich ist, wodurch die Akzeptanz von Elektroautos reduziert wird.

Aufgabe der Erfindung ist es nun, ein verbessertes Batterieladegerät sowie ein verbessertes Verfahren zum Betrieb desselben anzugeben. Insbesondere soll ein sicheres Laden auch an Netzen möglich sein, die keinen funktionierenden Schutzleiter aufweisen.

Erfindungsgemäss wird diese Aufgabe durch ein Batterieladegerät der eingangs genannten Art gelöst, welches zusätzlich eine Spannungsmesseinrichtung umfasst, welche zur Messung der Spannung zwischen dem Schutzleiter und zumindest einem Ausgangsspannungspotential des Gleichrichters eingerichtet ist.

Weiterhin wird die genannte Aufgabe durch ein Verfahren der eingangs genannten Art gelöst, bei dem die Spannung zwischen dem Schutzleiter und zumindest einem Ausgangsspannungspotential des Gleichrichters gemessen wird.

Erfindungsgemäss kann ein Isolationsfehler auf diese Weise sicher detektiert werden, sowohl wenn ein Schutzleiter vorhanden und angeschlossen ist, als auch wenn dieser fehlt oder unterbrochen ist.

An dieser Stelle wird angemerkt, dass anstelle der Messung der Spannung zwischen dem Schutzleiter und zumindest einem Ausgangsspannungspotential des Gleichrichters auch das Messen einer davon abgeleiteten Spannung zu verstehen ist. Die beiden Spannungen werden - da sie direkt voneinander abhängen - im Folgenden synonymisch gebraucht.

Vorteilhafte Ausgestaltungen und Weiterbildungen der Erfindung sind in den Unteransprüchen sowie in der Beschreibung in Zusammenschau mit den Figuren offenbart.

Vorteilhaft umfasst das Batterieladegerät eine Spannungsmesseinrichtung, welche zur Messung der Spannungen zwischen dem Schutzleiter und beiden Ausgangsspannungspotentialen des Gleichrichters eingerichtet ist. Auf diese Weise kann ein Isolationsfehler an beiden Ausgangsspannungspotentialen des Gleichrichters des Batterieladegerätes detektiert werden.

In einer weiteren vorteilhaften Ausgestaltung der Erfindung umfasst das Batterieladegerät eine Auswerteschaltung, welche mit der Spannungsmesseinrichtung verbunden oder in diese integriert ist und dazu eingerichtet ist, den zeitlichen Verlauf der zumindest einen gemessenen Spannung auszuwerten und im Falle einer Anomalität ein Fehlersignal auszugeben. Auf diese Weise kann die Detektionssicherheit eines Fehlers erhöht werden, indem die Fehlerauslösung nicht nur auf singuläre Zustände des Batterieladegeräts gestützt wird. Beispielsweise sind Fälle vorstellbar, bei denen eine Spannung zwischen dem Schutzleiter und zumindest einem Ausgangsspannungspotential des Gleichrichters kurzfristig gleich null ist, aber dennoch kein Fehler vorliegt. Mit der vorgestellten Variante der Erfindung kann ein Fehlalarm basierend auf einem solchen kurzfristigen Ereignis unterdrückt werden.

In obigem Zusammenhang ist es von Vorteil, wenn die Auswerteschaltung dazu eingerichtet ist, das Fehlersignal auszugegeben, wenn zumindest eine Spannung länger als eine Halbwelle der Netzeingangsspannungen kleiner als ein vorgebbarer Wert, insbesondere Null, ist. Wie anhand der Figuren noch näher erläutert werden wird, kann das Ausbleiben eines substantiellen Spannungswertes an einem der beiden Ausgangsspannungspotentiale des Gleichrichters für länger als eine Halbwelle der Eingangsspannung bei entsprechender Auslegung des Batterieladegeräts einen Isolationsfehler anzeigen, und zwar sowohl im europäischen Netz als auch im US-Netz. Das Batterieladegerät ist somit besonders universell einsetzbar.

In einer weiteren günstigen Variante umfasst das Batterieladegerät eine optische und/oder akustische Ausgabeeinheit, welche mit der Auswerteschaltung verbunden ist und dazu eingerichtet ist, ein optisches und/oder akustisches Signal auszugeben, wenn das Fehlersignal einen Fehler anzeigt. Auf diese Weise kann das Vorliegen eines Isolationsfehlers an den Benutzer des Batterieladegeräts signalisiert werden, welcher daraufhin geeignete Massnahmen einleiten kann.

In einer weiteren vorteilhaften Ausgestaltung der Erfindung umfasst das Batterieladegerät eine Schalteinrichtung, welche mit der Auswerteschaltung verbunden und dazu eingerichtet ist, einen Strom über den Wechselspannungseingang zu unterbrechen, wenn das Fehlersignal einen Fehler anzeigt. Auf diese Weise wird die Spannungsversorgung automatisch unterbrochen, wenn ein Isolationsfehler detektiert wird.

Günstig ist es, wenn das Batterieladegerät mehrere Schalteinrichtungen umfasst, von denen je wenigstens eine einem Nullleiter beziehungsweise einer Phase des Wechselspannungseingangs zugeordnet ist. Das bedeutet, dass wenigstens eine Schalteinrichtung einem Nullleiter und wenigstens eine Schalteinrichtung einer Phase zugeordnet ist. Auf diese Weise kann das Batterieladegerät allpolig vom Netz getrennt werden. Unter "mehreren Schalteinrichtungen" sind dabei sowohl einzelne Schalter mit je einer eigenen Steuerung (z.B. mehrere einpolige Relais) als auch einzelne Schalter mit einer gemeinsamen Ansteuerung (z.B. ein mehrpoliges Relais) zu verstehen.

Besonders vorteilhaft ist es, wenn die Schalteinrichtung durch eine Serienschaltung überbrückt ist, welche einen Kondensator und ein strombegrenzendes Element, insbesondere einen ohmschen Widerstand, umfasst. Damit fliesst bei einem Isolationsfehler auch bei offenem Schaltelement ein Fehlerstrom, welcher einen dem Batterieladegerät vorgelagerten Fehlerstromschutzschalter auslösen kann. Die Serienschaltung wird dabei vorzugsweise so ausgelegt, dass keine gefährlichen Fehlerströme fliessen können.

In einer weiteren günstigen Variante der Erfindung umfasst das Batterieladegerät eine Sicherung in Serie mit einer Schalteinrichtung. Auf diese Weise kann die Sicherheit des Batterieladegeräts gesteigert werden, da dieses - vorausgesetzt es ist an den Schutzleiter angeschlossen - mit Hilfe der Sicherungen im Fehlerfall auch dann vom Netz getrennt wird, wenn die Spannungsmesseinrichtung, die Auswerteschaltung oder die Schalteinrichtung einen Defekt aufweist oder zu langsam reagieren sollte.

In einer weiteren vorteilhaften Variante der Erfindung umfasst das Batterieladegerät zwei Spannungsteiler, welche eingangsseitig zwischen dem Eingang des Schutzleiters und je einem Ausgangsspannungspotential des Gleichrichters angeordnet und ausgangsseitig mit der Spannungsmesseinrichtung verbunden sind. Auf diese Weise können die Ausgangsspannungspotentiale des Gleichrichters auf ein definiertes Niveau in Bezug auf den (offenen) Schutzleiteranschluss gebracht werden. Desweiteren kann so anstelle der Messung der tatsächlichen Spannung zwischen dem Schutzleiter und zumindest einem Ausgangsspannungspotential des Gleichrichters das Messen einer davon abgeleiteten

Spannung erfolgen, welche niedriger und daher leichter von der Spannungsmesseinrichtung zu verarbeiten ist.

In einer besonders vorteilhaften Variante der Erfindung umfasst das Batterieladegerät eine Steuerung, welche dazu eingerichtet ist, die Schalteinrichtung oder die Schalteinrichtungen bei Anschluss des Batterieladegerätes an ein Wechselstromnetz wenigstens während einer Auslösezeit eines dem Batterieladegerät wechselspannungsseitig vorgelagerten Fehlerstromschutzschalters offen zu halten. Auf diese Weise kann - sofern die Schalteinrichtung mit Kondensatoren überbrückt ist - schon vor dem Anschalten des Batterieladegeräts an das Stromnetz geprüft werden, ob ein Isolationsfehler vorliegt, da bereits (kleine) Fehlerwechselströme fliessen können, welche von einem Fehlerstromschutzschalter in der Zuleitung erkannt werden. Das Batterieladegerät wird in einem solchen Fall überhaupt nicht mit gefährlicher Spannung versorgt, wodurch dieses besonders sicher ist.

Obwohl diese Variante eine vorteilhafte Weiterbildung der Erfindung darstellt, hängt die Funktionsweise dieser Variante nicht von einer Messung der Spannung zwischen dem Schutzleiter und zumindest einem Ausgangsspannungspotential des Gleichrichters ab. Die dargestellte Variante kann somit auch die Basis einer eigenständigen Erfindung bilden.

Schliesslich umfasst das Batterieladegerät in einer günstigen Variante einen DC/DC-Wandler, welcher eingangsseitig mit einem vom Gleichrichter gespeisten Zwischenkreis und ausgangsseitig mit dem Gleichspannungsausgang verbunden ist. Auf diese Weise kann die ausgangsseitige Gleichspannung in ein für die Batterie vorteilhaftes Niveau umgewandelt werden.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: schematisch eine Variante eines erfindungsgemässen Batterieladegerätes;
- Fig. 2: einen dem Batterieladegerät vorgelagerten Fehlerstromschutzschalter;
- Fig. 3: den zeitlichen Verlauf von zwei an der Spannungsmesseinrichtung anliegenden Eingangsspannungen bei korrekt arbeitendem Batterieladegerät in einem Netz mit Phase und Nullleiter;
- Fig. 4: den zeitlichen Verlauf der an der Spannungsmesseinrichtung anliegenden Eingangsspannungen bei korrekt arbeitendem Batterieladegerät in einem Netz mit zwei Phasen;
- Fig. 5: den zeitlichen Verlauf der an der Spannungsmesseinrichtung anliegenden Eingangsspannungen bei Kurzschluss zwischen dem positiven Ausgangsspannungspotential des Gleichrichters und Erde und
- Fig. 6: den zeitlichen Verlauf der an der Spannungsmesseinrichtung anliegenden Eingangsspannungen bei Kurzschluss zwischen dem negativen Ausgangsspannungspotential des Gleichrichters und Erde.

In den Figuren der Zeichnung sind gleiche und ähnliche Teile mit gleichen Bezugszeichen und funktionsähnliche Elemente und Merkmale - sofern nichts Anderes ausgeführt ist - mit gleichen Bezugszeichen aber unterschiedlichen Indizes versehen.

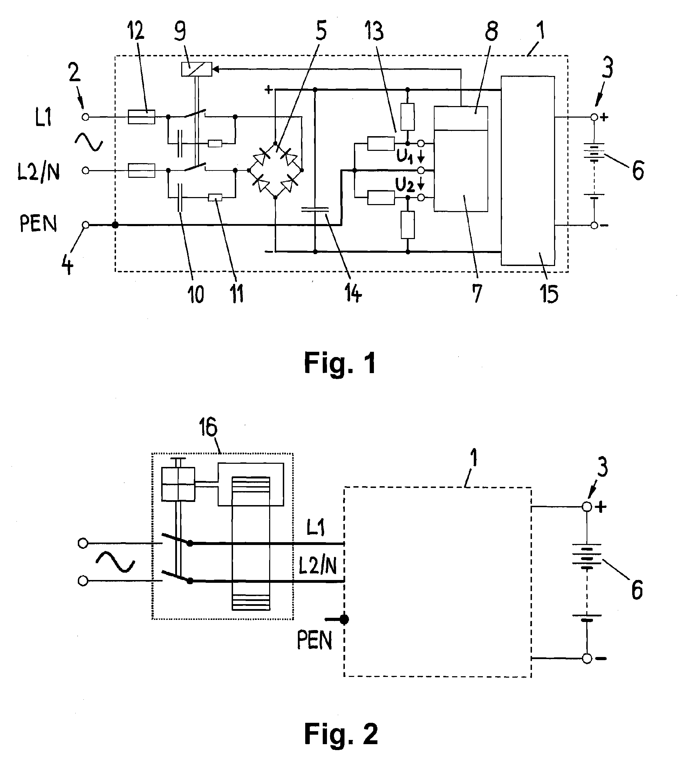

Fig. 1 zeigt ein Batterieladegerät 1, umfassend einen Wechselspannungseingang 2 und einen Gleichspannungsausgang 3, einen Eingang 4 für einen Schutzleiter PEN sowie einen mit dem Wechselspannungseingang 2 verbundenen Gleichrichter 5. Im gezeigten Beispiel ist der Wechselspannungseingang 2 mit zwei Phasen L1 und L2 beziehungsweise einer Phase L1 und einem Nullleiter N und der Gleichspannungsausgang 3 mit einer Batterie 6 verbunden. Weiterhin umfasst das Batterieladegerät 1 eine Spannungsmesseinrichtung 7, welche zur Messung einer von der Spannung zwischen dem Schutzleiter PEN, und zumindest einem Ausgangsspannungspotential des Gleichrichters 5 abgeleiteten Spannung U₁, U₂ eingerichtet ist.

Auf diese Weise kann ein Kurzschluss zwischen dem betreffenden Ausgangsspannungspotential und Erde, respektive dem Schutzleiter PEN detektiert werden. Konkret ist die Spannungsmesseinrichtung 7 beim Batterieladegerät 1 nach Fig. 1 zur Messung der Spannungen zwischen dem Schutzleiter PEN und sogar beiden Ausgangsspannungspotentialen des Gleichrichters 5 eingerichtet. Auf diese Weise kann ein Kurzschluss zwischen beiden Ausgangsspannungspotentialen des Gleichrichters 5 und Erde, respektive dem Schutzleiter PEN, detektiert werden.

Weiterhin umfasst das erfindungsgemässe Batterieladegerät 1 eine Schalteinrichtung 9, welche mit einer mit der Spannungsmesseinrichtung 7 verbundenen Auswerteschaltung 8 verbunden ist und dazu eingerichtet ist, einen Strom zwischen dem Wechselspannungseingang 2 und dem Gleichspannungsausgang 3 zu unterbrechen, wenn das Fehlersignal einen Fehler anzeigt (die Spannungsmesseinrichtung 7 und die Auswerteschaltung 8 können natürlich auch durch ein einziges Bauteil, beispielsweise durch einen entsprechenden integrierten Schaltkreis, gebildet sein).

In diesem Beispiel umfasst die Schalteinrichtung 9 ein Relais mit zwei Schaltkontakten von denen je einer dem Nullleiter N beziehungsweise einer Phase L1, L2 des Wechselspannungseingangs 3 zugeordnet ist. Alternativ wäre vorstellbar, dass das Batterieladegerät 1 mehrere gesonderte Schalteinrichtungen 9 - z.B. Relais - mit je einem Schaltkontakt aufweist, von denen je wenigstens einer dem Nullleiter N beziehungsweise einer Phase L1, L2 des Wechselspannungseingangs 3 zugeordnet ist. Das bedeutet, dass wenigstens eine Schalteinrichtung 9 dem Nullleiter N und wenigstens eine Schalteinrichtung 9 einer Phase L1, L2 zugeordnet ist.

Zusätzlich ist die Schalteinrichtung 9 durch eine Serienschaltung überbrückt, welche einen Kondensator 10 und ein strombegrenzendes Element, hier einen Widerstand 11, umfasst. Weiterhin umfasst das Batterieladegerät 1 eine Sicherung 12 in Serie mit der Schalteinrichtung 9.

Schliesslich umfasst das Batterieladegerät 1 zwei Spannungsteiler 13, welche eingangsseitig zwischen dem Schutzleiter PEN und je einem Ausgangsspannungspotential des Gleichrichters 5 und ausgangsseitig mit der Spannungsmesseinrichtung 7 verbunden sind, sowie einen Pufferkondensator 14. Beispielsweise dient letzterer dazu, die Spannung in einem Zwischenkreis im Wesentlichen konstant zu halten. Auch kann er dazu geeignet sein, die Pulsströme eines angeschlossenen Verbrauchers aufzunehmen und die damit verbundenen elektromagnetischen Störungen vom Netz fernzuhalten. Dies ist dann vorteilhaft, wenn das Batterieladegerät 1 wie hier einen DC/DC-Wandler 15 umfasst, welcher eingangsseitig mit einem vom Gleichrichter 5 gespeisten Zwischenkreis und ausgangsseitig mit dem Gleichspannungsausgang 3 verbunden ist.

An dieser Stelle wird angemerkt dass einige der vom Batterieladegerät 1 umfassten Elemente, welche in Fig. 1 dargestellt sind, zwar vorteilhaft aber für die erfindungsgemässe Funktion nicht zwingend erforderlich sind. Insbesondere sind dies die Schalteinrichtung 9, der Kondensator 10, der Widerstand 11, die Sicherung 12 und der Spannungsteiler 13. Denkbar ist natürlich auch, dass die im Beispiel verwendeten Bauteile durch alternative Bauteile gebildet sind. Beispielsweise kann anstelle des Widerstands 11 eine aktive Strombegrenzung mit einem Transistor vorgesehen sein. Denkbar wäre auch, dass die Schalteinrichtung 9 elektronische Schalter umfasst (sofern gesetzliche Vorschriften nicht zur Verwendung galvanisch trennender Schalter verpflichten).

Fig. 2 zeigt nun einen herkömmlichen Fehlerstromschutzschalter 16 in der Netzzuleitung. Es wird angenommen, dass dieser nur bei reinen Fehler-Wechselströmen auslöst. Beispielsweise kann der Fehlerstromschutzschalter 16 Bestandteil einer Hausinstallation sein. Denkbar ist aber auch, dass der Fehlerstromschutzschalter 16 - so wie dies häufig der Fall ist - als Schutz vor elektrischem Schlag bei fehlendem Erdleiter im Ladekabel integriert ist. Um die Kosten für diesen Fehlerstromschutzschalter 16 tief zu halten, sind die Fahrzeughersteller bestrebt, möglichst einfache Typen einzusetzen, die nur bei reinen Fehler-Wechselströmen (AC) garantiert ansprechen, nicht unbedingt aber bei pulsierenden Gleichströmen (DC), wie sie aber bei modernen Ladegeräten durchaus vorkommen können.

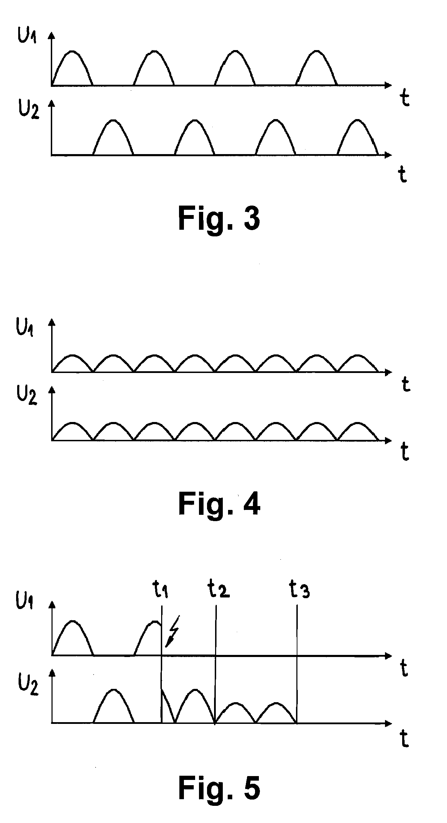

Die Funktion des in Fig. 1 dargestellten Batterieladegeräts wird nun anhand der Figuren 3 bis 6 näher erläutert:
Betrachtet wird die Situation am europäischen Netz (oder am 120V-US-Netz), bei dem Nullleiter N und Schutzleiter PEN im wesentlichen dasselbe Potential aufweisen, da sie in der vorgelagerten Installation miteinander verbunden sind. An das Stromnetz L1, N, PEN ist das fehlerfrei funktionierende Batterieladegerät 1 angeschlossen, wobei die Schalter der Schalteinrichtung 9 als geschlossen und der Schutzleiter PEN als angeschlossen vorausgesetzt werden. Für die Spannungen U₁ und U₂ ergibt sich somit der in Fig. 3 dargestellte Verlauf.

Der positive Ausgang des Gleichrichters 5 ist bei einer positiven Halbwelle von L1 mit dieser Phase verbunden, im gleichen Moment ist der Nullleiter N - und damit der Erd- bzw. Schutzleiter PEN - mit dem negativen Ausgang des Gleichrichters 5 verbunden. Die Spannung U₂ ist in diesem Moment also Null, während die Spannung U₁ ein positives Abbild der positiven Halbwelle von L1 ist.

Der negative Ausgang des Gleichrichters 5 ist bei einer negativen Halbwelle von L1 mit dieser Phase verbunden, im gleichen Moment ist der Nullleiter N - und damit der Erd- bzw. Schutzleiter PEN - mit dem positiven Ausgang des Gleichrichters 5 verbunden. Die Spannung U₁ ist in diesem Moment also Null, während die Spannung U₂ ein positives Abbild der negativen Halbwelle von L1 ist.

Dies führt dazu, dass die Spannung U₁ bzw. U₂ abwechslungsweise jeweils nur für eine Halbwelle der Netzfrequenz grösser Null ist. Da das Gehäuse geerdet ist, bleiben die Spannungen U₁, U₂ unbeeinflusst, egal ob das Gehäuse durch eine Person berührt wird oder nicht.

Zudem sind die Spannungen U₁ und U₂ gleich hoch gegenüber dem Potential des Schutzleiters PEN, welcher ja - wie eingangs vorausgesetzt - im europäischen Netz dasselbe Potential wie der Nullleiter N hat.

Betrachtet wird nun die Situation am 240V-US-Netz, bei dem die Spannung jedes der beiden Netzleiter (Phasen) L1 und L2 gegenüber dem Schutzleiter PEN 120V beträgt, die Phase von L1 gegen L2 aber um 180° gedreht ist, sodass sich zwischen den Phasen L1 und L2 eine Spannung von 240V ergibt.

Ist das fehlerfrei funktionierende Batterieladegerät 1 an das Stromnetz L1, L2, PEN angeschlossen, so ergibt sich für die Spannungen U₁ und U₂ der in Fig. 4 dargestellte Verlauf. Das Potential des Schutzleiters befindet sich in diesem Netz immer zwischen den beiden Phasensignalen, sodass sich ein symmetrischer Verlauf der Spannungen U₁, U₂ ergibt, aber - bei gleicher Eingangsspannung - mit der halben Amplitude.

Im dargestellten Beispiel umfasst das Batterieladegerät 1 ein geschlossenes Metallgehäuse, welches mit dem Schutzleiter PEN verbunden ist. Somit ist ein Schutz vor elektrischem Schlag immer gegeben, da ein Erdschluss einer Phase oder des Nullleiters zum Durchbrennen mindestens einer der Sicherungen 12 führt, wenn nicht die Schalteinrichtung 9 rechtzeitig geöffnet wird, so wie dies nachfolgend für den Fall eines nicht angeschlossenen Schutzleiters PEN erläutert wird.

Ist der Schutzleiter PEN im Europäischen Netz nicht verbunden, so wird das Potential des Gehäuses beziehungsweise des offenen Schutzleiteranschlusses 4 durch die Spannungsteiler 13 auf die halbe Ausgangsspannung des Gleichrichters 5 gezogen, sodass sich für die beiden Spannungen U₁ und U₂ ein symmetrischer Verlauf wie bereits in Fig. 4 dargestellt ergibt, sowohl für das Europäische Netz als auch das US-Netz.

Die Teilungsverhältnisse der Spannungsteiler 13 sind im Wesentlichen gleich und betragen z.B. 100:1, sodass die Eingangsspannung für die Spannungsmesseinrichtung 7 vergleichsweise klein ist. Durch Wahl hoher Widerstandswerte wird der Ableitstrom zudem so klein gehalten, dass er weder Personen gefährden noch den dem Batterieladegerät 1 vorgelagerten Fehlerstromschutzschalter 16 auslösen kann.

Wird das Gehäuse nun von einer Person berührt, so wird dieses geerdet, sodass sich dabei der in Fig. 3 (Europäisches Netz) beziehungsweise der in Fig. 4 (US-Netz) dargestellte Spannungsverlauf ergibt. Ein fehlerfrei funktionierendes Ladegerät 1 wird dadurch in seiner Funktion nicht beeinflusst, und der durch die berührende Person fliessende Ableitstrom ist so klein, dass er nicht wahrgenommen wird und zu keiner Gefährdung führen kann.

Liegt nun ein Masseschluss als Kurzschluss zwischen dem positiven Ausgangsspannungspotential des Gleichrichters 5 und Erde oder dem metallischen Gehäuse des Batterieladegeräts 1 vor und ist der Schutzleiter PEN nicht an dieses angeschlossen oder unterbrochen, so ergibt sich ein Verlauf der Spannung U₁, welcher von der Fig. 3 und der Fig. 4 abweicht. Fig. 5 zeigt einen Fall, bei dem während einer positiven Halbwelle ein solcher Kurzschluss auftritt (symbolisiert durch einen Blitz beim Zeitpunkt t₁).

Aus der Fig. 5 ist deutlich die auftretende Anomalität zu erkennen. Konkret bleibt die Spannung U₁ dauerhaft auf dem Wert Null oder liegt nur unwesentlich darüber, wohingegen die Spannung U₂ keine Pausen mehr zwischen den einzelnen Halbwellen aufweist. Diese Anomalitäten im zeitlichen Verlauf der Spannung U₁ und/oder U₂ können somit für die Detektion eines aufgetretenen Masseschlusses herangezogen werden.

Konkret ist das Batterieladegerät 1 in diesem Beispiel dazu eingerichtet, das Fehlersignal auszugegeben, wenn zumindest eine Spannung der Spannungen U₁ oder U₂ länger als für die Dauer einer Netzspannungs-Halbwelle Null ist oder kleiner als ein vorgebbarer Wert (um auch einen Masseschluss mit einem höheren Widerstand zwischen dem Ausgangsspannungspotential des Gleichrichters 5 und Erde detektieren zu können). Vorteilhaft zeigt ein Ausbleiben eines substantiellen Wertes für die Spannung U₁ oder U₂ für länger als eine Halbwelle sowohl im Europäischen Netz als auch im US-Netz sicher das Vorliegen eines Masseschlusses an.

Beispielsweise kann das erfindungsgemässe Batterieladegerät 1 eine optische und/oder akustische Ausgabeeinheit umfassen oder mit dieser verbunden sein, sodass mit deren Hilfe ein optisches und/oder akustisches Signal ausgegeben wird, wenn ein Isolationsfehler detektiert wird. Alternativ oder zusätzlich kann mit Hilfe der Schalteinrichtung 9 auch ein Strom über den Wechselspannungseingang 2 unterbrochen werden, wenn das Fehlersignal einen Fehler anzeigt.

Konkret wird in Fig. 5 die Schalteinrichtung 9 zum Zeitpunkt t₂ geöffnet, wodurch das Batterieladegerät 1 nur mehr über die aus den Kondensatoren 10 und den Widerständen 11 gebildeten RC-Gliedern versorgt wird. Die Spannung U₂ sinkt wegen des zusätzlichen Spannungsabfalls an den RC-Gliedern somit ab.

In dem in Fig. 5 dargestellten Beispiel wird die Schalteinrichtung 9 im Nulldurchgang betätigt. Somit dauert die Zeitspanne, während der die Spannung U₁ auf dem Wert Null ist, länger als eine Halbwelle und maximal zwei Halbwellen. Denkbar wäre aber natürlich auch, den Nulldurchgang nicht abzuwarten und die Schalteinrichtung 9 sofort auszuschalten, wenn die Spannung U₁ länger als eine Halbwelle Null beziehungsweise kleiner als ein vorgebbarer Wert ist.

Wegen der Kondensatoren 10 fliesst nun nur mehr ein Fehler-Wechselstrom, welcher - anders als ein Fehler-Gleichstrom - von dem Fehlerstromschutzschalter 16 in der Zuleitung erkannt wird. In Folge schaltet auch der Fehlerstromschutzschalter 16 zum Zeitpunkt t₃ ab, wodurch eine noch höhere Sicherheit erreicht wird.

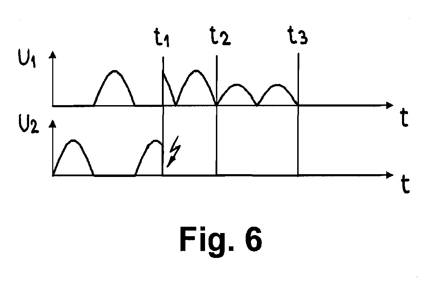

Fig. 6 zeigt nun einen zu dem in Fig. 5 dargestellten Fall analogen Fall, jedoch tritt der Masseschluss als Kurzschluss zwischen dem negativen Ausgangsspannungspotential des Gleichrichters 5 und Erde oder dem metallischen Gehäuse des Batterieladegeräts 1 auf (Zeitpunkt t₁). Demgemäss ist nun die Spannung U₂ länger als eine Halbwelle Null oder kleiner als ein vorgebbarer Wert, wodurch wieder ein Ausschalten der Schalteinrichtung 9 (Zeitpunkt t₂) beziehungsweise des Fehlerstromschutzschalters 16 (Zeitpunkt t₃) ausgelöst wird.

In einer weiteren Variante der Erfindung umfasst das Batterieladegerät 1 eine Steuerung, welche dazu eingerichtet ist, die Schalteinrichtung 9 bei Anschluss des Batterieladegerätes 1 an ein Wechselstromnetz L1, L2/N wenigstens während einer Auslösezeit eines dem Batterieladegerät 1 wechselspannungsseitig vorgelagerten Fehlerstromschutzschalters 16 offen zu halten.

Somit wird das Batterieladegerät 1 vorerst nur über die Kondensatoren 10 an das Wechselspannungsnetz L1, L2/N angekoppelt, weswegen bei Vorliegen eines Kurzschlusses zwischen einem Ausgangsspannungspotential 5 des Gleichrichters und Erde oder dem metallischen Gehäuse des Batterieladegeräts 1 nur FehlerWechselströme fliessen können (siehe auch die Zeitperiode zwischen t₂ und t₃ in den Figuren 5 und 6). Der Fehlerstromschutzschalter 16 in der Zuleitung erkennt dies und schaltet dementsprechend die Spannungsversorgung ab. Da die Schalteinrichtung 9 länger offen gehalten wird, als die Auslösezeit Fehlerstromschutzschalters 16 ist, wird das Batterieladegerät 1 in einem solchen Fall überhaupt nicht mit Spannung versorgt, wodurch dieses besonders sicher ist.

Obwohl diese Variante eine vorteilhafte Weiterbildung der Erfindung darstellt, hängt die Funktionsweise dieser Variante nicht von einer Messung der Spannung zwischen dem Schutzleiter PEN und zumindest einem Ausgangsspannungspotential des Gleichrichters 5 ab. Die dargestellte Variante kann somit auch die Basis einer eigenständigen Erfindung bilden.

### Bezugszeichenliste

- 1: Batterieladegerät
- 2: Wechselspannungseingang
- 3: Gleichspannungsausgang
- 4: Schutzleiter
- 5: Gleichrichter
- 6: Batterie
- 7: Spannungsmesseinrichtung
- 8: Auswerteschaltung
- 9: Schalteinrichtung
- 10: Kondensator
- 11: strombegrenzendes Element (Widerstand)
- 12: Sicherung
- 13: Spannungsteiler
- 14: Pufferkondensator
- 15: DC/DC-Wandler
- 16: Fehlerstromschutzschalter
- U: Spannung
- U₁: erste Eingangsspannung der Spannungsmesseinrichtung 7
- U₂: zweite Eingangsspannung der Spannungsmesseinrichtung 7
- t: Zeit
- t₁: Zeitpunkt, zu dem ein Kurzschluss zwischen einem Ausgangsspannungspotential des Gleichrichters und dem Schutzleiter PEN auftritt
- t₂: Zeitpunkt, zu dem die Schalteinrichtung 9 geöffnet wird
- t₃: Zeitpunkt, zu dem der Fehlerstromschutzschalter 16 geöffnet wird.

## Patentansprüche

1. Batterieladegerät (1), umfassend:
- einen Wechselspannungseingang (2),
- einen Gleichspannungsausgang (3),
- einen Eingang (4) für einen Schutzleiter (PEN) und
- einen mit dem Wechselspannungseingang (2) verbundenen Gleichrichter (5),
**gekennzeichnet durch**
eine Spannungsmesseinrichtung (7), welche zur Messung der Spannung zwischen dem Schutzleiter (PEN) und zumindest einem Ausgangsspannungspotential des Gleichrichters (5) eingerichtet ist.

2. Batterieladegerät (1) nach Anspruch 1, **gekennzeichnet durch** eine Spannungsmesseinrichtung (7), welche zur Messung der Spannungen (U₁, U₂) zwischen dem Schutzleiter (PEN) und beiden Ausgangsspannungspotentialen des Gleichrichters (5) eingerichtet ist.

3. Batterieladegerät (1) nach Anspruch 1 oder 2, **gekennzeichnet durch** eine Auswerteschaltung (8), welche mit der Spannungsmesseinrichtung (7) verbunden ist und dazu eingerichtet ist, den zeitlichen Verlauf der zumindest einen gemessenen Spannung (U₁, U₂) auszuwerten und im Falle einer Anomalität ein Fehlersignal auszugeben.

4. Batterieladegerät (1) nach Anspruch 3, **dadurch gekennzeichnet, dass** die Auswerteschaltung (8) dazu eingerichtet ist, das Fehlersignal auszugegeben, wenn zumindest eine Spannung (U₁, U₂) länger als eine Halbwelle der Netzeingangsspannungen kleiner als ein vorgebbarer Wert ist.

5. Batterieladegerät (1) nach Anspruch 3 oder 4, **gekennzeichnet durch** eine optische und/oder akustische Ausgabeeinheit, welche mit der Auswerteschaltung (8) verbunden ist und dazu eingerichtet ist, ein optisches und/oder akustisches Signal auszugeben, wenn das Fehlersignal einen Fehler anzeigt.

6. Batterieladegerät (1) nach einem der Ansprüche 3 bis 5, **gekennzeichnet durch** eine Schalteinrichtung (9), welche mit der Auswerteschaltung (8) verbunden ist und dazu eingerichtet ist, einen Strom über den Wechselspannungseingang (3) zu unterbrechen, wenn das Fehlersignal einen Fehler anzeigt.

7. Batterieladegerät (1) nach Anspruch 6, **gekennzeichnet durch** mehrere Schalteinrichtungen (9), von denen je wenigstens eine einem Nullleiter (N) beziehungsweise einer Phase (L1, L2) des Wechselspannungseingangs (3) zugeordnet ist.

8. Batterieladegerät (1) nach Anspruch 6 oder 7, **dadurch gekennzeichnet, dass** eine Schalteinrichtung (9) durch eine Serienschaltung, welche einen Kondensator (10) und ein strombegrenzendes Element (11) umfasst, überbrückt ist.

9. Batterieladegerät (1) nach einem der Ansprüche 6 bis 8, **gekennzeichnet durch** eine Sicherung (12) in Serie mit der Schalteinrichtung (9).

10. Batterieladegerät (1) nach einem der Ansprüche 2 bis 9, **gekennzeichnet durch** zwei Spannungsteiler (13), welche eingangsseitig zwischen dem Eingang (4) für den Schutzleiter (PEN) und je einem Ausgangsspannungspotential des Gleichrichters (5) angeordnet und ausgangsseitig mit der Spannungsmesseinrichtung (7) verbunden sind.

11. Batterieladegerät (1) nach einem der vorgehenden Ansprüche **gekennzeichnet durch** eine Steuerung, welche dazu eingerichtet ist, die Schalteinrichtung (9) oder die Schalteinrichtungen bei Anschluss des Batterieladegerätes (1) an ein Wechselstromnetz (L1, L2/N) wenigstens während einer Auslösezeit eines dem Batterieladegerät (1) wechselspannungsseitig vorgelagerten Fehlerstromschutzschalters (16) offen zu halten.

12. Batterieladegerät (1) nach einem der vorgehenden Ansprüche, **gekennzeichnet durch** einen DC/DC-Wandler (15), welcher eingangsseitig mit einem vom Gleichrichter (5) gespeisten Zwischenkreis und ausgangsseitig mit dem Gleichspannungsausgang (3) verbunden ist.

13. Verfahren zum Betrieb eines Batterieladegeräts (1), welches einen Wechselspannungseingang (2) und einen Gleichspannungsausgang (3), einen Eingang für einen Schutzleiter (PEN), sowie einen mit dem Wechselspannungseingang (2) verbundenen Gleichrichter (5) umfasst
**dadurch gekennzeichnet dass**
die Spannung (U₁, U₂) zwischen dem Schutzleiter (PEN) und zumindest einem Ausgangsspannungspotential des Gleichrichters (5) gemessen wird.
